Europäisches Patentamt

European Patent Office

Office européen des brevets

(19)

(11) **EP 1 669 730 A2**

(12) **EUROPEAN PATENT APPLICATION**

(43) Date of publication:
**14.06.2006 Bulletin 2006/24**

(51) Int Cl.:
*G01J 9/04* (2006.01)

(21) Application number: **05008566.1**

(22) Date of filing: **19.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **07.12.2004 US 7500**

(71) Applicant: **Agilent Technologies Inc. (a Delaware Corporation)**
**Palo Alto, CA 94306-2024 (US)**

(72) Inventors:
 • **MCAlexander, William Ian**
  **Mountain View**
  **CA 94043 (US)**
 • **Szafraniec, Bogdan**
  **Sunnyvale**
  **CA 94086 (US)**

(74) Representative: **Schoppe, Fritz et al**
 **Schoppe, Zimmermann, Stöckeler & Zinkler**
 **Patentanwälte**
 **Postfach 246**
 **82043 Pullach bei München (DE)**

(54) **Heterodyne-based optical spectrum analysis using data clock sampling**

(57)    A complex spectrum related to a carrier signal (40) that is modulated (26) with random data is measured as a function of the data clock so that the randomness that is contributed by the modulation of random data can be ignored. In one embodiment, the complex spectrum that is expressed in terms of both spectral amplitude and spectral phase is sampled (76) only at the carrier frequency and at the frequencies that are away from the carrier signal by integral multiples of the clock frequency. This sampling approach reduces the complex spectrum to only those data points that are needed to characterize the average pulse shape of the modulated carrier signal.

FIG.1

EP 1 669 730 A2

**Description**

## BACKGROUND OF THE INVENTION

Heterodyne-based optical spectrum analyzers (OSAs) offer high-resolution analysis of optical signals that are used in fiber-optic communications systems. In one application, heterodyne-based OSAs can be used to measure the spectral phase of a carrier signal that has a periodic modulation. Periodic modulation of a carrier signal results in spectrally resolved discrete sidebands and the phase of each sideband is typically measured with respect to its nearest neighbor to obtain the relative phase across the entire signal spectrum. The spectral amplitude, $\alpha(\nu)$, and the spectral phase, $\varphi(\nu)$, define a complex spectrum $\alpha(\nu)\exp(j\varphi(\nu))$, where $\nu$ is the optical frequency. The complex spectrum may also be expressed in terms of a complex phase difference spectrum $\alpha(\nu)\exp(j\Delta\varphi(\nu))$, where $\Delta\varphi(\nu)$ represents a phase difference between two optical frequencies $\nu - f/2$ and $\nu + f/2$ where $f$ represents a chosen frequency. From a complex spectrum, the time-domain representation of the signal of interest can be obtained through a simple integral transform (e.g., an inverse Fourier transform).

Although it is known how to measure the spectral amplitude and phase when periodic modulation is applied to a carrier signal, the known techniques do not work for the case in which the carrier signal is modulated to carry random data. In the case of a carrier signal that is modulated to carry random data, the spectrum becomes continuous and the phase difference $\Delta\varphi(\nu)$ becomes random for most chosen frequencies 'f'. Nevertheless, it is still desirable to recover the underlying pulse shape of the carrier signal through spectral analysis.

## SUMMARY OF THE INVENTION

Spectral information related to a carrier signal that is modulated with random data is measured as a function of the data clock so that the randomness that is contributed by the modulation of random data can be ignored. In one embodiment, a complex spectrum is sampled at the carrier frequency and at intervals of the data clock away from the frequency of the carrier signal. This sampling approach reduces the data to those data points that are needed to characterize the pulse shape of the carrier signal.

A method for characterizing a carrier signal in accordance with the invention involves combining a data modulated carrier signal and a local oscillator signal into a combined signal, wherein the data modulated carrier signal carries random data at a rate that is timed by a data clock, and generating a complex spectrum from the combined signal as a function of the data clock. The complex spectrum can then be used to characterize the pulse shape of the data modulated carrier signal.

A system for characterizing a carrier signal in accordance with the invention includes a coupler and a receiver. The coupler is configured to combine a data modulated carrier signal and a local oscillator signal into a combined signal, wherein the data modulated carrier signal carries random data at a rate that is timed by a data clock. The receiver is configured to generate a complex spectrum from the combined optical signal. The system may also include a sampler that is configured to obtain samples from the complex spectrum as a function of the data clock.

Other aspects and advantages of the present invention will become apparent from the following detailed description, taken in conjunction with the accompanying drawings, illustrated by way of example of the principles of the invention.

## BRIEF DESCRIPTION OF THE DRAWINGS

Fig. 1 depicts a heterodyne-based optical spectrum analyzer that is configured to measure spectral information as a function of the clock rate of the incoming data in accordance with an embodiment of the invention.
Fig. 2A depicts an example of an amplitude modulated carrier signal that is modulated at a periodic rate as viewed in the time domain.
Fig. 2B depicts the modulated carrier signal of Fig. 2A in the frequency domain.
Fig. 3A depicts an example of a phase modulated carrier signal that is modulated at a periodic rate as viewed in the time domain.
Fig. 3B depicts the carrier signal from Fig. 3A as viewed in the frequency domain.
Fig. 4A depicts the spectral amplitude of an amplitude modulated signal that is modulated with random data.
Fig. 4B depicts the spectral phase of the same amplitude modulated carrier signal as Fig. 4A.
Fig. 5A depicts an example of the sampled spectral amplitude that results from sampling the spectral amplitude from Fig. 4A at the central peak and at intervals of the data clock away from the central peak in accordance with an embodiment of the invention.
Fig. 5B depicts an example of the sampled spectral phase that results from sampling the spectral phase from Fig. 4B at the central peak and at intervals of the data clock away from the central peak in accordance with an embodiment of the invention.
Fig. 6 graphically depicts the transformation (e.g., through an inverse Fourier transform) of complex frequency domain spectrum information (amplitude and phase) into time domain information (amplitude and phase).
Fig. 7 depicts a functional block diagram of a technique for characterizing a data modulated signal in accordance with an embodiment of the invention.
Fig. 8A depicts exemplary continuous spectral amplitude.
Fig. 8B depicts exemplary continuous spectral phase difference.

Fig. 9 depicts a process flow diagram of a method for characterizing a carrier signal in accordance with an embodiment of the invention.

Throughout the description, similar reference numbers may be used to identify similar elements.

DETAILED DESCRIPTION

Complex spectrum information related to a carrier signal that is modulated with random data is sampled as a function of the data clock so that the randomness that is contributed by the modulation of random data can be ignored. In one embodiment, the complex phase difference spectrum expressed in terms of both spectral amplitude and spectral phase is sampled at the carrier frequency and at intervals of the data clock away from the carrier signal.

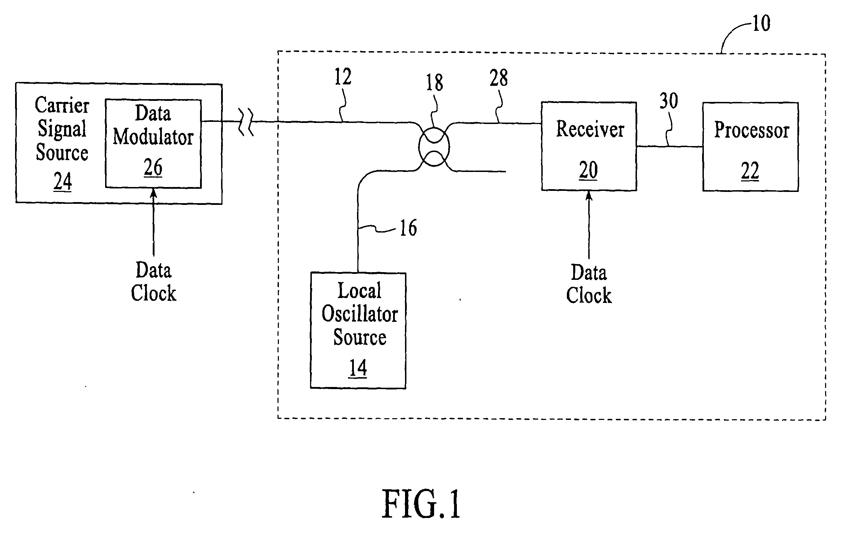

Fig. 1 depicts a heterodyne-based optical spectrum analyzer (OSA) 10 that is configured to measure a complex phase difference spectrum as a function of the clock rate of the incoming data. The optical spectrum analyzer includes a carrier signal fiber 12, a local oscillator source 14 that could be a modulated local oscillator, a local oscillator fiber 16, a coupler 18, a receiver 20, and a processor 22. The optical signal fiber of the heterodyne-based OSA is optically connected to receive a data-modulated carrier signal from a carrier signal source 24. The components of the heterodyne-based OSA are described first followed by a description of the technique for characterizing a carrier signal.

The carrier signal fiber 12 guides a data modulated carrier signal that is to be characterized by the heterodyne-based OSA 10. In an embodiment, the carrier signal fiber is a single mode optical fiber as is known in the field, although other optical waveguides may be utilized. In addition, although waveguides are described herein, optical signals may be input into the system, or transmitted within the system, in free space.

The carrier signal that is to be characterized by the heterodyne-based OSA 10 includes an optical carrier that is generated from the carrier signal source 24. For example, the carrier signal may be generated from an external cavity laser or multiple lasers and may consist of a single wavelength or multiple wavelengths as is known in the field of optical communications. In addition to the wavelength characteristic, the carrier signal is modulated by the data modulator 26 to carry random data. The carrier signal may be externally amplitude modulated or phase modulated. Alternatively, the laser source could by directly modulated. Direct modulation produces a simultaneous amplitude and phase modulation. Whether the carrier signal is externally amplitude modulated, phase modulated, or directly modulated, the modulation occurs at a frequency that is timed by a clock (referred to herein as the data clock). For purposes of this description, the data clock (also referred to herein as the data clock rate or the data clock frequency) is equal to the bit rate of the data that is being carried. That is, if the bit rate is 10 Gbps, then the data clock rate is 10 GHz.

The local oscillator source 14 generates a local oscillator signal. In an embodiment, the local oscillator source is a highly coherent tunable laser that is continuously swept over a frequency range that is large enough to map the data spectrum of interest. In one example, if the data clock is 10 GHz, the optical frequency of the local oscillator signal may span approximately 30 to 40 GHz on either side of the carrier signal. In one embodiment, the sweep rate of the local oscillator signal at 1,550 nanometers is approximately 100 nm/s or 12.5 MHz/us and the sweep range is approximately 100 nm. However, the sweep rate and sweep range can be higher or lower depending on the implementation. In one embodiment, sweeping the local oscillator signal across a range of wavelengths involves incrementally tuning the local oscillator signal in steps to different wavelengths. In another embodiment, sweeping the local oscillator signal across a range of wavelengths involves a smooth transition between wavelengths. The local oscillator signal may be externally phase or intensity modulated to produce multiple optical frequencies. The local oscillator signal can be a modulated local oscillator signal having multiple optical frequencies.

The coupler 18 is optically connected to the carrier signal source 24 and to the local oscillator source 14 by fibers 12 and 16, respectively. The coupler optically combines the data-modulated carrier signal and the swept local oscillator signal into a combined optical signal and outputs at least one portion of the combined optical signal to the optical receiver 20 via output fiber 28. The coupler may be an optically directional 3dB fiber coupler, although other optical couplers may be utilized. Although the coupler is described below as outputting one beam of the combined optical signal to the receiver, it should be understood that embodiments of the coupler that output more than one beam of the combined optical signal are possible (e.g., for use with a balanced receiver and/or a polarization diversity receiver).

The receiver 20 includes at least one photodetector (not shown) that is aligned to detect and mix the combined optical signal that is output from the coupler 18. The receiver generates electrical signals in response to the received optical signal. The electrical signals generated by the receiver are provided to the processor 22 for use in characterizing the carrier signal. The electrical connection between the receiver and the processor is depicted in Fig. 1 by line 30. Although not shown, the receiver may include additional signal processing circuitry such as signal amplifiers, filters, and signal combiners as is known in the field. The receiver may also include polarization selective optics to permit polarization diverse reception and/or polarization analysis of the carrier signal. As an alternative to a photodetector-based optical receiver, the heterodyne receiver may utilize other detection devices, such as a non-linear mixing element. As is described in more detail below, the receiver measures a complex phase difference spectrum as a function of a data clock.

The processor 22 includes a multifunction processor that receives the electrical signals from the receiver 20 and isolates the heterodyne beat signal to generate an output signal that is indicative of an optical parameter or parameters, such as optical frequency (or wavelength), spectral amplitude, spectral phase, pulse shape, amplitude, and phase of the modulated optical carrier signal. The processor may include either or both analog signal processing circuitry and digital signal processing circuitry as is known in the field of electrical signal processing. In an embodiment, analog signals from the receiver are converted into digital signals and the digital signals are subsequently processed to generate an output signal. The processor may also include any combination of hardware and software based processing.

In operation, a data-modulated carrier signal generated by the carrier signal source 24 propagates through the carrier signal fiber 12 towards the coupler 18. Simultaneously, a swept local oscillator signal generated by the local oscillator source 14 propagates through the local oscillator fiber 16 towards the coupler. The carrier signal and the swept local oscillator signal are combined at the coupler into a combined optical signal. The combined optical signal is output onto output fiber 28 and transmitted to the receiver 20. The combined optical signal is detected and mixed by the receiver and an electrical signal that represents the complex spectrum is generated in response to the combined optical signal. As is described in more detail below, measurements of the complex spectrum are obtained as a function of the data clock. Furthermore, the sampled complex spectrum is then used by the processor 22 to determine an optical parameter of the modulated optical carrier signal, such as wavelength, frequency, spectral amplitude, spectral phase, amplitude, pulse shape, phase, and group delay. As used herein the complex spectrum can be expressed in terms of absolute spectral amplitude $\alpha(v)$ and spectral phase $\varphi(v)$ as $\alpha(v)exp(j\varphi(v))$ or in terms of a complex phase difference spectrum as $\alpha(v)exp(j\Delta\varphi(v))$, where $\Delta\varphi(v)$ represents a phase difference between two optical frequencies $v - f_{clock}/2$ and $v + f_{clock}/2$ where $f_{clock}$ represents the data clock frequency.

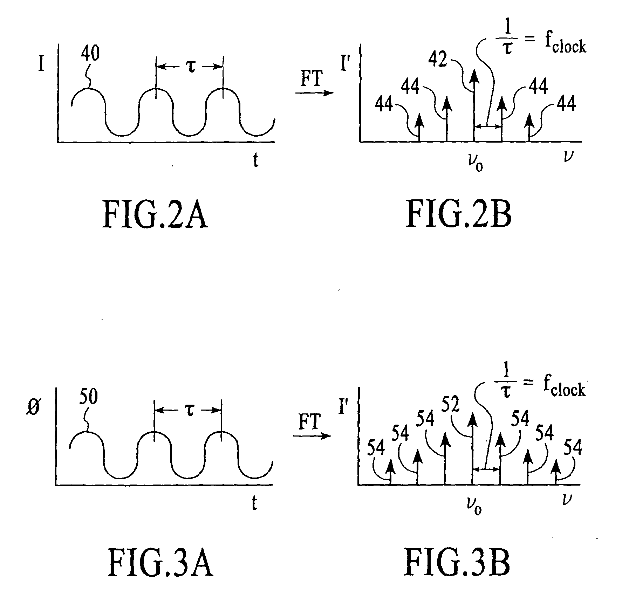

As is well-known in the field of optical communications, data can be modulated onto a carrier signal using amplitude modulation or phase modulation. Fig. 2A depicts an example of an amplitude modulated carrier signal 40 that is modulated at a periodic rate as viewed in the time domain (i.e., intensity vs. time). In this example, the carrier signal has a sinusoidal intensity modulation and a period ("bit period") that is identified as $\tau$. The bit period can be expressed in terms of a data clock or data clock frequency ($f_{clock}$) as:

$$\tau = 1/f_{clock}$$

If the carrier signal depicted in Fig. 2A is modulated at a constant periodic rate (i.e., random data is not being carried), well-defined sidebands 44 are generated in the frequency domain (spectral power density vs. frequency). As is well known in the field, time domain information can be converted to the frequency domain using an integral transform (e.g., a Fourier transform). Fig. 2B depicts the signal of Fig. 2A in the frequency domain. The central peak 42 in the frequency domain is at the frequency of the carrier signal ($v_0$). The sidebands that result from the periodic intensity modulation are separated from the central peak by a factor of $1/\tau$ (or $f_{clock}$). For example, the nearest sidebands are separated from the central peak by $1/\tau$ and the next sidebands are separated from the central peak by $2/\tau$. The amplitude and phase of the sidebands in the frequency domain spectrum completely describe the modulation of the carrier signal in the time domain.

Similar relationships exist if the carrier signal 50 is phase modulated. Fig. 3A depicts an example of a phase modulated carrier signal as viewed in the time domain. In this example, the carrier signal has a sinusoidal phase modulation at a period (a "bit period") of $\tau$. If the carrier signal is modulated at a periodic rate (i.e., random data is not being carried), again, well-defined sidebands are generated when the carrier signal is viewed in the frequency domain (i.e., spectral power density vs. frequency). Fig. 3B depicts the carrier signal from Fig. 3A as viewed in the frequency domain. The sidebands 54 that result from the constant phase modulation are separated from the central peak 52 by a factor of $1/\tau$ (or $f_{clock}$). In contrast to the spectrum information of Fig. 2B, the sidebands 54 of Fig. 3B have different amplitude and phase relations which describe the phase modulated signal 50 as opposed to the intensity modulated signal 40 of Fig. 2A.

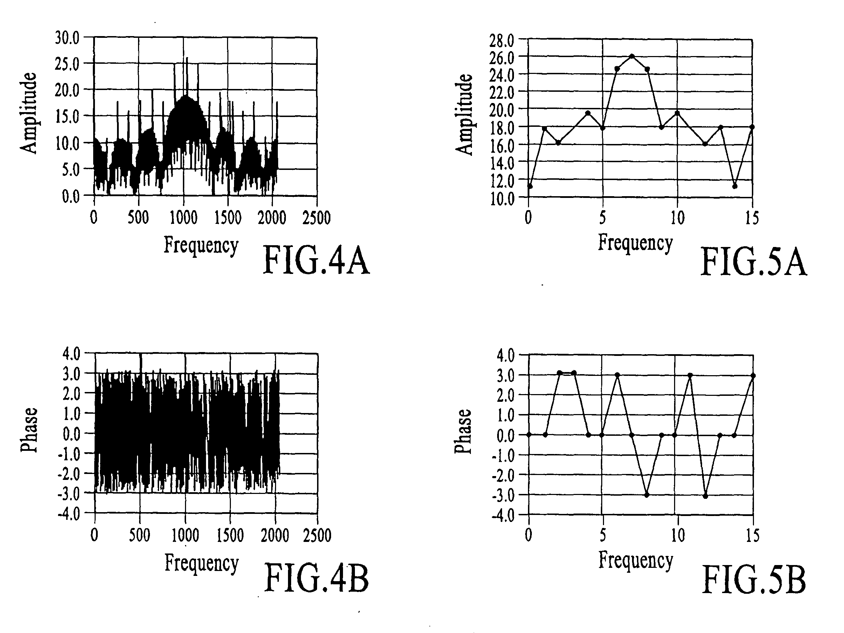

As depicted in Figs. 2B and 3B, the complex spectrum, as viewed in the frequency domain, is well-defined when the carrier signal is modulated at a constant periodic rate. However, most data that is carried in optical communications systems is random in nature and is not characterized by constant periodic modulation. In particular, communicating random digital data requires a random mix of amplitude or phase changes to be applied to a carrier signal. The random nature of the amplitude or phase changes causes the frequency spectrum information, as measured by a heterodyne-based OSA in terms of amplitude or phase, to be considerably more complicated. For example, Fig. 4A depicts the spectral amplitude of an intensity modulated carrier signal that is modulated with random data using a return to zero (RZ) format. However, despite the additional frequency content (as compared to periodic modulation), one can identify the sidebands that are related to the underlying clock modulation. Fig. 4B depicts the spectral phase of the same intensity modulated carrier signal as Fig. 4A. In contrast to the spectral amplitude of Fig. 4A, the spectral phase appears entirely random since the phase relation between pulses is random. Therefore, while useful spectral amplitude information can be identified or recovered when data modulation of random data is applied to the carrier signal, useful spectral phase information is not as readily identifiable or recoverable.

As described above, the underlying pulse shape of the carrier signal (average pulse shape or an average eye diagram) is defined by the spectral components that are separated from the central peak by a factor of the bit period or data clock ($f_{clock}$). In accordance with the invention, a complex phase difference spectrum related to a modulated carrier signal that is modulated with random data is measured as a function of the data clock so that the randomness that is contributed by the modulation of random data can be ignored. In one embodiment, the complex phase difference spectrum is expressed in terms of both spectral amplitude and spectral phase difference is sampled only at the carrier frequency ($v_0$) and at intervals of the data clock ($f_{clock}$) away from the carrier signal (e.g., $v_0$, $v_0 \pm f_{clock}$, $v_0 \pm 2f_{clock}$, etc.). This sampling approach reduces the data to only these data points that are needed to characterize the average pulse shape (average eye diagram) of the carrier signal. Fig. 5A depicts an example of the sampled spectral amplitude that results from sampling the spectral amplitude from Fig. 4A at the central peak and at intervals of the data clock away from the central peak. As depicted in Fig. 5A, the amount of data is greatly reduced from that of Fig. 4A. Although the amount of data is greatly reduced, the key data points, i.e., the carrier signal and the sidebands, which represent the modulated carrier signal are retained. Likewise, Fig. 5B depicts an example of the sampled spectral phase that results from sampling the spectral phase from Fig. 4B at the central peak and at intervals of the data clock away from the central peak. As depicted in Fig. 5B, the amount of data is greatly reduced from that of Fig. 4B. Although the amount of data is greatly reduced, the key data points that represent the modulated carrier signal are retained. It should be noted that the data clock used within the OSA does not have to have the same signal source as the data clock that is used in the data modulation. The data clock used within the OSA need only be the same frequency (or a function thereof) as the data clock that is used in the data modulation. Using data clocks with different sources allows the OSA to function remotely and independently from the carrier signal source 24. Furthermore, the data clock within the OSA can be recovered from the modulated optical carrier signal.

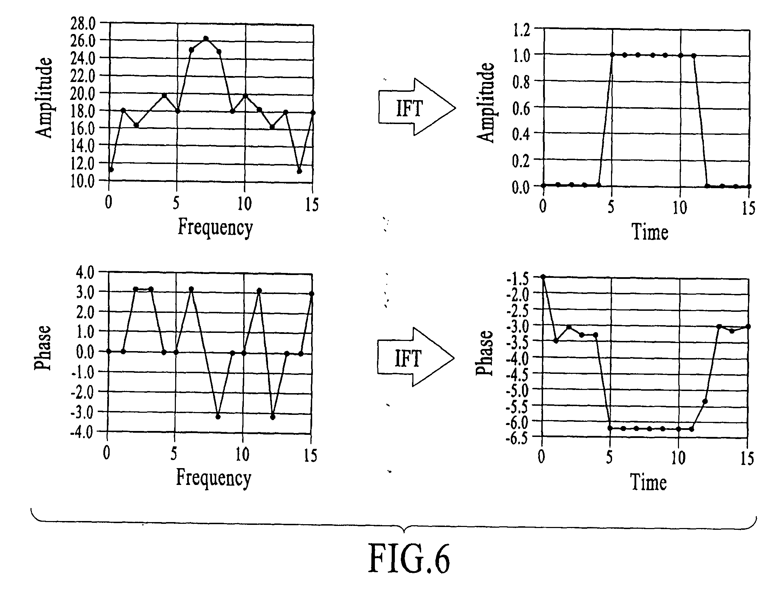

Data pattern changes lead to the changes of spectral amplitude and spectral phase shown in Figs. 4A and 4B. However, the sampled spectral amplitude and spectral phase depicted in Figs. 5A and 5B remains fixed since the underlying average pulse shape (eye diagram) is fixed. The sampled spectral amplitude and the sampled spectral phase can be utilized to characterize the modulated optical carrier signal. In one embodiment, an inverse Fourier transform is applied to the sampled complex spectrum to obtain the underlying average pulse shape (average eye diagram) of the modulated optical carrier signal in the time domain. For example, applying an inverse Fourier transform to the sampled complex spectrum yields time domain information which can be displayed as amplitude vs. time and phase vs. time as shown in Fig. 6. Fig. 6 graphically depicts the transformation (e.g., through an inverse Fourier transform) of a complex spectrum (amplitude and phase) into the time domain (amplitude and phase). Note that the resulting average pulse shape in the time domain accurately represents the amplitude modulated square pulse train (RZ format) of the carrier signal. In particular, the square amplitude in the time domain and the flat phase profile in the region with non-zero amplitude are indicative of amplitude modulation.

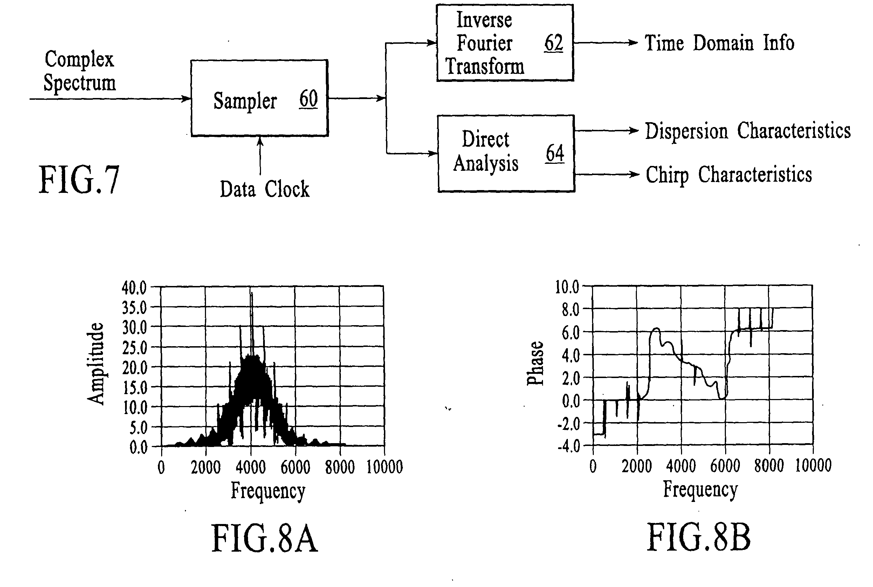

In addition to transforming the sampled complex spectrum from the frequency domain to the time domain, the measured complex spectrum can be used for direct analysis of the modulated optical signal or transmission media. For example, the measured complex spectrum (particularly the phase information) can be used to determine dispersion of the transmission media or the chirp characteristics of the directly modulated laser source. Fig. 7 depicts a functional block diagram of the above-described technique for characterizing a data modulated carrier signal when using sampling. According to the technique, the complex spectrum is sampled as a function of the data clock at a sampler 60. For example, the complex spectrum is sampled only at the carrier frequency ($v_0$) and at intervals of the data clock ($f_{clock}$) away from the carrier signal (e.g., $v_0$, $v_0 \pm f_{clock}$, $v_0 \pm 2f_{clock}$, etc.). After the spectrum is sampled and depending on the implementation, an inverse Fourier transform 62 can be applied to the sampled data and/or the sampled data can be used in direct analysis 64.

The examples of Figs. 4A - 6B are described with reference to a carrier signal that is amplitude modulated to carry random data. The same techniques can be applied to a carrier signal that is phase modulated to carry random data, or phase and amplitude modulated like a directly modulated laser, e.g., a DFB laser.

In the example described with reference to Figs. 5A and 5B, the spectrum information is sampled at the central peak (i.e., $v_0$) and at intervals of the data clock ($f_{clock}$) away from the central peak. In an alternative embodiment, the spectral amplitude and spectral phase measurements are continuously sampled. That is, spectral phase difference measurements are continuous (i.e., they do not have to be sampled). However, the phase difference is measured for the frequency spacing that is a function of the data clock as described below. Although spectral amplitude and spectral phase measurements are made at the smallest possible frequency intervals (i.e., are continuous), the spectral phase measurement (or spectral phase difference measurement) that is made at each frequency is defined to be a measure of relative phase between spectral components that are spaced apart by the data clock ($f_{clock}$). In one embodiment, this relative phase or phase difference measurement at an optical frequency 'ν' is taken to be the phase difference between ν - ($f_{clock}$/2) and ν + ($f_{clock}$/2). This enables the reconstruction of a repeatable and continuous spectral phase across a modulated carrier signal complex spectrum that is modulated with random data. It also relaxes the constraint of having to identify and isolate the clock sidebands as described above. Figs. 8A and 8B depict exemplary graphs of spectral amplitude and spectral phase that are generated when the complex phase difference spectrum for an RZ modulated, pseudo-random bit stream (PRBS) of cosine$^2$ pulse shape (raised cosine) is sampled continuously. The spectral phase difference measurement is taken between frequencies that are spaced apart by a data clock ($f_{clock}$). In particular, at a given optical frequency 'ν,' the amplitude is sampled at 'ν' while the phase difference measurement, which is displayed at 'ν', is taken between spectral components at 'ν-$f_{clock}$/2' and 'ν+$f_{clock}$/2'.

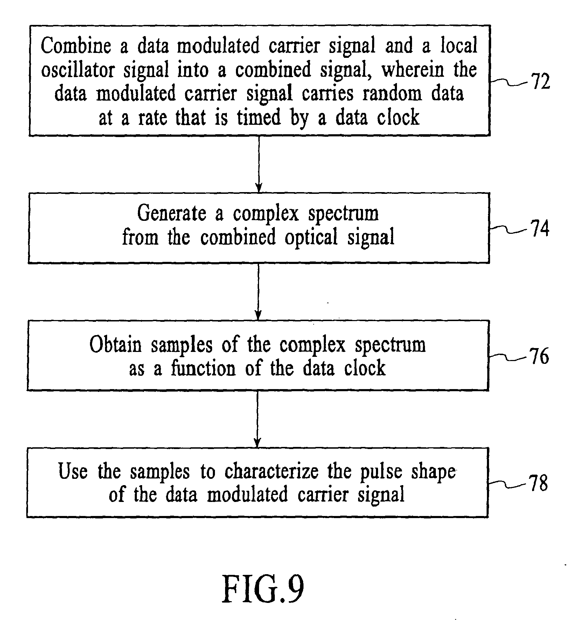

Fig. 9 depicts a process flow diagram of a method for characterizing a carrier signal in accordance with an embodiment of the invention. At step 72, a data modulated carrier signal and a local oscillator signal are combined into a combined signal, wherein the data modulated carrier signal carries random data at a rate that is timed by a data clock. At step 74, a complex spectrum is generated from the combined optical signal. At step 76, samples of the complex spectrum are obtained as a function of the data clock. At step 78, the samples are used to characterize the pulse shape of the data modulated carrier signal.

In the above-described embodiment, the modulated carrier signal has unknown optical characteristics that are measured by the optical spectrum analyzer. The optical carrier signal with known optical characteristics, may alternatively be used for optical network analysis. In an embodiment, a known optical carrier signal may be a portion of the local oscillator signal. When the optical spectrum analyzer is utilized for optical network or component analysis, the characteristics of a network or a single component can be determined by inputting a known optical carrier signal into the network or into a single component and then measuring the response to the known signal.

In an embodiment, the heterodyne-based OSA 10 of Fig. 1 may include amplitude or phase modulators located on fibers 12 and 16 to provide multiple optical waves and to enable spectral phase measurements. The modulators may be used to modulate either or both the carrier signal and the local oscillator signal as a function of the clock frequency such that the resulting heterodyne beat signal, which is generated in the receiver 20, contains information about the complex phase difference spectrum that is an appropriate function of the clock frequency as described above.

As used herein, the term random data includes pseudo-random data. For example, random data includes a pseudo-random bit stream (PRBS) that is generated from a random data generator.

Although the spectrum information is described as being sampled at the receiver 20 (Fig. 1) as a function of the data clock, in an alternative embodiment, the sampling as a function of the data clock occurs at the processor 22. The particular location of the data clock-specific sampling is not critical. In one embodiment, measurement of the phase difference takes place in the receiver 20. Then, the data clock frequency is used in the receiver 20 as the intermediate frequency to combine spectral positive and negative spectral images as well know by those skilled in the art.

Although specific embodiments in accordance with the invention have been described and illustrated, the invention is not limited to the specific forms and arrangements of parts so described and illustrated. The invention is limited only by the claims.

## Claims

1. A method for characterizing a carrier signal comprising:

   combining (72) a data modulated carrier signal (40) and a local oscillator signal into a combined signal, wherein the data modulated carrier signal carries random data at a rate that is timed by a data clock; and
   generating (74) a complex spectrum from the combined signal.

2. The method of claim 1 further including obtaining (76) samples from the complex spectrum as a function of the data clock.

3. The method of claim 2 further including using (78) the samples to characterize the pulse shape of the data modulated carrier signal.

4. The method of claim 2 wherein the carrier signal (40) has a carrier signal frequency and wherein the samples are obtained at the carrier signal frequency and at frequency intervals of the data clock away from the carrier signal frequency.

5. The method of claim 2 wherein the samples (76) represent amplitude and phase spectrum information in the frequency domain and further including converting the spectrum information in the frequency domain to the time domain to characterize the pulse shape of the data modulated carrier signal.

6. A system for characterizing a carrier signal comprising:

   a coupler (18) configured to combine a data modulated carrier signal and a local oscillator signal into a combined signal, wherein the data modulated carrier signal carries random data at a rate that is timed by a data clock; and a receiver (20) configured to generate a complex spectrum from the combined optical signal.

7. The system of claim 6 further including a sampler (60) configured to obtain samples from the complex spectrum as a function of the data clock.

8. The system of claim 7 further including a processor (22) configured to characterize the pulse shape of the data modulated carrier signal in response to the samples.

9. The system of claim 7 wherein the carrier signal has a carrier signal frequency and wherein the sampler (60) is configured to obtain the samples at the carrier signal frequency and at frequency intervals of the data clock away from the carrier signal frequency.

10. The system of claim 6 wherein the receiver (20) is further configured for relative phase measurements and wherein the spectral components of the relative phase measurements are separated by intervals that are a function of the data clock.

EP 1 669 730 A2

Carrier Signal Source 24

Data Modulator 26

Data Clock

12

18

28

Local Oscillator Source 14

16

Receiver 20

Data Clock

30

Processor 22

10

FIG.1

FIG.2A

FIG.2B

FIG.3A

FIG.3B

EP 1 669 730 A2

FIG.4A

FIG.5A

FIG.4B

FIG.5B

FIG.6

FIG.7

Complex Spectrum → Sampler 60 ← Data Clock

Sampler 60 → Inverse Fourier Transform 62 → Time Domain Info

Sampler 60 → Direct Analysis 64 → Dispersion Characteristics / Chirp Characteristics

FIG.8A

(Amplitude vs. Frequency; Amplitude axis: 0.0, 5.0, 10.0, 15.0, 20.0, 25.0, 30.0, 35.0, 40.0; Frequency axis: 0, 2000, 4000, 6000, 8000, 10000)

FIG.8B

(Phase vs. Frequency; Phase axis: -4.0, -2.0, 0.0, 2.0, 4.0, 6.0, 8.0, 10.0; Frequency axis: 0, 2000, 4000, 6000, 8000, 10000)

Combine a data modulated carrier signal and a local
oscillator signal into a combined signal, wherein the
data modulated carrier signal carries random data
at a rate that is timed by a data clock

~72

Generate a complex spectrum
from the combined optical signal

~74

Obtain samples of the complex spectrum
as a function of the data clock

~76

Use the samples to characterize the pulse shape
of the data modulated carrier signal

~78

# FIG.9